# EUROPEAN PATENT SPECIFICATION

(11) **EP 2 416 434 B1**
(45) Date of publication and mention of the grant of the patent: **25.01.2017**
(21) Application number: 09842627.3
(22) Date of filing: 31.03.2009
(51) Int. Cl.: B60L 3/00, H01M 10/04, H01M 2/02, B60L 11/18

(54) **RECHARGEABLE BATTERY AND BATTERY SYSTEM**
SEKUNDÄRBATTERIE UND BATTERIESYSTEM
BATTERIE SECONDAIRE ET SYSTÈME DE BATTERIE

(43) Date of publication of application: 08.02.2012
(73) Proprietor: Mitsubishi Heavy Industries, Ltd., Tokyo 108-8215 (JP)
(72) Inventor: KANDA, Yoshiaki, Mihara-shi Hiroshima 729-0393 (JP)
(74) Representative: Henkel, Breuer & Partner
(86) International application number: PCT/JP2009/056684
(87) International publication number: WO 2010/113273

(56) References cited:
- EP-A2- 0 981 175
- JP-A- 2000 182 579
- JP-A- 2004 031 121
- JP-A- 2004 047 161
- JP-A- 2006 040 899
- JP-A- 2007 335 307
- JP-A- 2008 091 079
- US-A1- 2008 078 594

## Description

### Technical Field

The present invention relates to a rechargeable battery in which a positive electrode and a negative electrode are stacked or laminated with a separator, an electric vehicle in which the battery is used, and a power supply/power storage system.

### Background Art

Among rechargeable batteries, batteries which can be charged, a lithium-ion rechargeable battery has particularly high energy density and capacity. Therefore, lithium-ion rechargeable batteries have been used as power sources of consumer electronics, and recently, have been paid attention to as power sources of electric vehicles, power sources for household-use, and storage batteries for storing surplus power generated at power plants or the like.

As type of the lithium-ion rechargeable battery, there are mainly two types that are a wound-type and a stacked-type. A wound-type lithium-ion rechargeable battery is formed by stacking a pair of band-shaped positive electrode and negative electrode interposing a separator, and forming the stacked electrodes in a spiral shape. In a stacked-type lithium-ion rechargeable battery, a plurality of sheet-shaped positive electrodes and a plurality of sheet-shaped negative electrodes are stacked interposing a plurality of separators.

In the stacked-type lithium-ion rechargeable battery, a group of electrodes made up of the plurality of sheet-shaped positive electrodes and the plurality of sheet-shaped negative electrodes is sealed into an angular battery can or a prismatic can having a substantially rectangular cross section. In the wound-type lithium-ion rechargeable battery, the group of electrodes is sealed into a cylindrical battery can having a substantially circular cross section or an angular battery can, depending on the case.

Both the stacked-type and the wound-type lithium-ion rechargeable batteries are structured in such a manner that a sheet-shaped positive electrode and a sheet-shaped negative electrode are stacked with a separator arranged between them. Thus, there is a case where a relative position between the sheet-shaped positive electrode and the sheet-shaped negative electrode may deviate in the battery can. That is, a "stacking deviation" may occur in the battery can. Where the stacking deviation occurs, the positive electrode may be in contact with the negative electrode to cause short circuits inside the battery. Further, since the battery can is made of an electro-conductive material, it is necessary to insulate the battery can from the positive electrode and the negative electrode.

Thus, in a proposed structure of a stacked-type lithium-ion rechargeable battery in which a group of electrodes is sealed into an angular battery can, sheet-shaped electrode planes located at the ends of the group of electrodes are stacked or laminated with insulating polypropylene-made auxiliary sheets, and the auxiliary sheets are fixed by a tape together with the group of electrodes (refer to below-described Patent Document 1).
Patent Document 1: Japanese Unexamined Patent Application, First Publication, No. 2008-91099

US 2008/078594 A1 provides a negative electrode active material for nonaqueous electrolyte battery, a nonaqueous electrolyte battery, a battery pack and a vehicle. It is taught that a laminate type electrode group has a structure in which positive electrodes and negative electrodes are laminated alternately together while interposing separators therebetween.

EP 0 981 175 A2 provides a polymer electrolyte fuel cell stack. It is taught that a process first laid unit cell laminates one upon another to yield a cell laminate, and sequentially disposed a pair of metal current collectors, a pair of insulator plates composed of an electrically insulating material, and a pair of end plates across the cell laminate.

JP 2004 031121 A provides laminated cells and a battery pack. It is taught that a negative electrode laminates a negative active material on both sides of copper foil collectors (negative electrode foil). A positive electrode and a negative electrode are laminated through a separator.

### DISCLOSURE OF THE INVENTION

### Problems to be Solved by the Invention

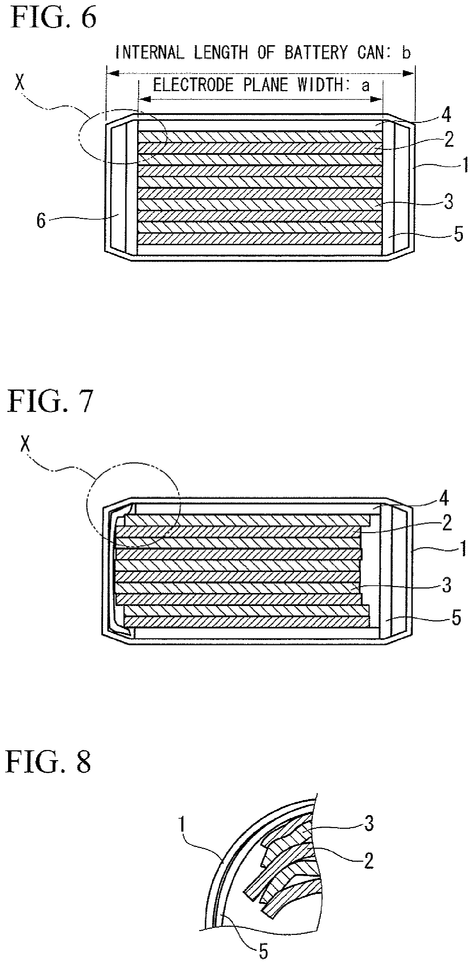

The above-described proposed structure attempts to provide insulation of the planes in a stacking direction, and prevent the stacking deviation with fixing the auxiliary sheets and the stacked electrodes by using a tape. However, it was found that the proposed structure was insufficient in preventing the stacking deviation, and the battery could not exert designed performance. An explanation will be given for the findings with reference to FIG. 6, FIG. 7 and FIG. 8.

FIG. 6 shows a cross section of an angular battery can 1 in a direction of a plane on which a positive electrode terminal and a negative electrode terminal (neither of which is illustrated) are formed. A group of electrodes, in which the sheet-shaped positive electrodes 2 and sheet-shaped negative electrodes 3 are stacked or laminated with a separator (not illustrated), is inserted into the angular battery can 1. In order to insulate the group of electrodes from the electro-conductive angular battery can 1, polypropylene-made auxiliary sheets 4, 5 are arranged at four ends of the group of electrodes, as shown in the figure, along the long-side and the short-side of the plane on which the positive electrode terminal and the negative electrode terminal are formed. Because a width of the group along the long-side direction is made equal to an internal length of the battery can along the long-side direction, sheet-shaped electrodes near the corners may be compressed and deformed since corners X of the angular battery can are rounded. In such a case, the separator might be broken and troubles (e.g., short circuits) might be happend. In order to avoid such deformation of the sheet-shaped electrodes, the width of the group is designed to have a length slightly smaller than the internal length of the battery can along the long-side such that the electrodes are not influenced by the rounded corners X of the battery can.

Since the angular battery can 1 is required to store an electrolyte solution, it is necessary to provide a certain space, that is, a hollow portion 6, between the group of electrodes and the angular battery can 1. Therefore, an insulating material of the auxiliary sheet 5 having a minimum thickness sufficient for providing insulation, in other words, an insulating material which is extremely thin and tension-free is used.

However, when the battery mentioned above is used in a power source, for example, as an electric vehicle generating vibration to the angular battery can 1 continuously, the auxiliary sheet 5 is deformed along the shape of the angular battery can 1 due to the weight of the group of electrodes. Therefore, the sheet-shaped positive electrode 2 and the sheet-shaped negative electrode 3 deviate in the long-side direction, as shown in Fig. 7. As a result, the separator might be broken and that troubles such as short circuits might be happened, when the deviation of the sheet-shaped positive electrode 2 and the sheet-shaped negative electrode 3 near the ends of the group of electrodes along the angular battery can 1 occurs, as shown in Fig. 8 which is an enlarged view of a corner of the angular battery can 1. On the other hand, a sheet shaped electrode at the center of the group of electrodes hardly undergoes deformation such as bending even when the deviation of the ends of the group of the electrodes occurs, since the electrode at the center is contacted with an inner wall of the angular battery can 1 at a vertical angle. Therefore, this electrode is less likely to cause troubles.

An object of the present invention, which has been made in view of the above problems, is to provide a rechargeable battery capable of preventing deformation of electrodes at a corner of an angular battery can as much as possible even when the vibration is inflicted to the battery continuously, thereby exhibiting designed performance to the maximum extent, and a power supply or power storage system in which the same battery is used.

### Solutions for the Problems

there is provided a rechargeable battery as outlined in independent claim 1, an electric vehicle as outlined in independent claim 6, and a power storage system as outlined in independent claim 7. Advantageous developments are defined in the dependent claims.

The electric vehicle may include any vehicles which can be electrically driven, and therefore may be a hybrid vehicle.

The power generating equipment includes any equipment which generates power. For example, the power generating equipment includes a solar battery, a fuel battery, a wind mill, a thermal power plant, a hydroelectric power plant and an atomic power plant. The power generating equipment may include a simple electric generator installed on a vehicle, a bicycle, an elevator or the like. As well as a power generating equipment of electric power plants, the power generating equipment may be a power generating equipment for household use.

According to the rechargeable battery and the battery system of the present invention, it is possible to prevent deformation of electrodes near a corner of the angular battery can along the round part of the corner of the angular battery can by using the insulating auxiliary sheets, each of which has a width greater than the width of the group of electrodes in the long-side of a plane of the angular battery can where the positive electrode terminal and the negative electrode terminal are formed and has a thickness substantially covering or filling a round part of a corner of the angular battery can. This effect can be obtained in any of the wound-type and the stacked-type rechargeable batteries, for example, a stacked-type lithium-ion rechargeable battery and a wound-type lithium-ion rechargeable battery.

The insulating auxiliary sheet may be made of a plastic resin, for example, polypropylene, in view of easy forming. Unilate® or the like may also usable. It is required that the insulating auxiliary sheet is not damaged by an electrolyte solution. In order to attain sufficient infiltration of the electrolyte solution through the group of electrodes, it is preferable that the insulating auxiliary sheet itself has functions which allow the electrolyte solution to infiltrate. A hole bored through the first insulating auxiliary sheet and a hole bored through the second insulating auxiliary sheet, each of that is called as a "through hole", may be formed for the insulating auxiliary sheets to have the above functions of infiltration.

As the insulating auxiliary sheet, it is possible to use a tension-free sheet.

Where the sheet has a sufficient thickness to cover the round parts of the corners, even though the sheet is free of tension, it is possible to prevent deformation of electrodes near corners of the angular battery can along the round parts of the corners of the angular battery can .

Where a material and/or thickness of the insulating auxiliary sheet is adjusted to provide a plate having tension or that which is difficult to bend or deform, thus making it possible to prevent deformation of the electrodes more reliably.

Because the insulating auxiliary sheets are fixed to each other by the insulating tape while holding and pressing the group of electrodes by the insulating auxiliary sheets, it is possible to prevent the group of electrodes from deviating within the planes of the insulating auxiliary sheets, even when vibration is imparted.

Because the insulating auxiliary sheets having a width along a direction perpendicular to a plane of the angular battery can on which the positive electrode terminal and the negative electrode terminal are formed, which is greater than that of the group of electrodes along the direction, and the group of the electrodes are pressed and fixed by the insulating tape, it is possible to reduce bending of electrode tabs of a plurality of sheet-shaped positive electrodes electrically connected to the positive electrode terminals and bending of a plurality of sheet-shaped negative electrodes electrically connected to the negative electrode terminals in a stacked-type rechargeable battery, thereby preventing occurrence of troubles.

That is, even when the rechargeable battery is erroneously placed upside down, because the group of electrodes is fixed in the plane of the wider-shaped insulating auxiliary sheets which are protruded to the electrode tabs and because the insulating auxiliary sheets, but not the group, are in contact with the angular battery can. Therefore, the group of electrodes in the battery can is positioned within the plane of the insulating auxiliary sheets and the group of electrodes is not contact with the battery can. Thus, as compared with a case where no insulating auxiliary sheets are provided, it is possible to reduce bending of the electrode tabs.

In this instance, where the insulating auxiliary sheet is selected from a sheet having tension or a plate which is not likely to be deformed, the insulating auxiliary sheets arranged with the group of electrodes by the insulating tape, serve as insertion guides during inserting the group of electrodes into the angular battery can. Therefore, the group of electrodes can be easily inserted into the angular battery can.

The above-described rechargeable batteries may be connected in series or in parallel to constitute a battery pack.

### Effects of the Invention

According to the present invention, even when vibration is continuously inflicted to the angular battery can, it is possible to prevent sheet-shaped electrodes at an end of the group of electrodes from being deformed along a round part of a corner of the angular battery can. As a result, it is possible to provide a rechargeable battery which has fewer troubles and exhibits designed performance and a power supply/power storage system in which the rechargeable battery is used.

### BRIEF DESCRIPTION OF DRAWINGS

FIG. 1A is a drawing which shows a positional relationship of a sheet-shaped positive electrode, a sheet-shaped negative electrode and an insulating auxiliary plate in a stacked-type lithium-ion rechargeable battery of an embodiment of the present invention. FIG. 1B is a cross sectional view of an angular battery can of a stacked-type lithium-ion rechargeable battery of an embodiment of the present invention.
FIG. 2 is a drawing which shows a positional relationship between sheet-shaped positive electrodes, sheet-shaped negative electrode sand insulating auxiliary plates in a stacked-type lithium-ion rechargeable battery in an embodiment of the present invention.
FIG. 3 is a cross sectional view which shows an angular battery can of a stacked-type lithium-ion rechargeable battery in an embodiment of the present invention.
FIG. 4A is a drawing which shows shapes of openings (i.e., holes) of an insulating auxiliary plate of a stacked-type lithium-ion rechargeable battery in an embodiment of the present invention. FIG. 4B is a drawing which shows shapes of openings of the insulating auxiliary plate of the stacked-type lithium-ion rechargeable battery in an embodiment of the present invention. FIG. 4C is a drawing which shows shapes of openings of an insulating auxiliary plate of the stacked-type lithium-ion rechargeable battery in an embodiment of the present invention.
FIG. 5 is a schematic diagram which shows a power supply/power storage system that utilizes a stacked-type lithium-ion rechargeable battery of an embodiment of the present invention.
FIG. 6 is a cross sectional view of an angular battery can of a stacked-type lithium-ion rechargeable battery according to a conventional art of the present invention.
FIG. 7 is a cross sectional view of the angular battery can of a stacked-type lithium-ion rechargeable battery which shows a problem of the conventional art of the present invention.
FIG. 8 is an enlarged cross sectional view of the angular battery can of a stacked-type lithium-ion rechargeable battery which shows a problem of the conventional art of the present invention.

- 1:: Angular battery can
- 2:: Sheet-shaped positive electrode
- 3:: Sheet-shaped negative electrode
- 4:: Insulating auxiliary sheet
- 5:: Insulating auxiliary sheet
- 6:: Hollow portion
- 7:: Bag-shaped separator
- 8:: Insulating auxiliary plate
- 9:: Side-plane insulating auxiliary sheet
- 10:: Insulating tape
- 11:: Bottom insulating auxiliary sheet
- 12:: Insulating tape
- 13:: Insulating tape
- 14:: House
- 15:: Backup rechargeable battery
- 16:: Control box
- 17:: Power-supplying electric system
- 18:: Power generating equipment
- 19:: Distribution board
- 20:: Electric vehicle
- 21:: Rechargeable battery

### MODE FOR CARRYING OUT THE INVENTION

Hereinafter, a rechargeable battery of an embodiment according to the present invention is explained with reference to the drawings. The present invention is not limited to the following embodiments, but can be variously modified without departing from the scope of the present invention.

### First embodiment

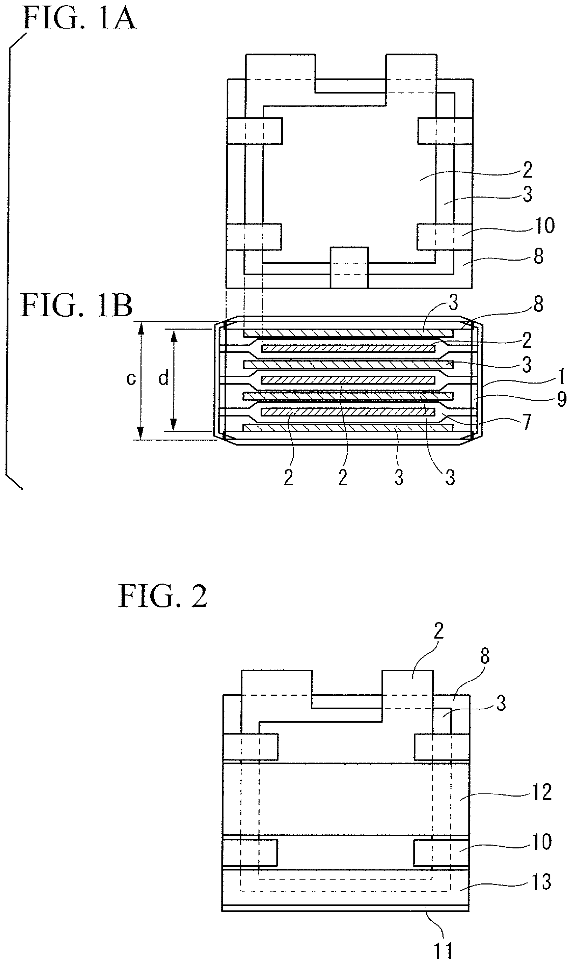

FIG. 1A is a drawing which shows a relationship of sheet-shaped positive electrodes 2, sheet-shaped negative electrodes 3, insulating auxiliary sheets (or plates) 8 and insulating tapes 10 which are sealed into an angular battery can 1. FIG. 1B shows a lateral cross section parallel to a plane of the angular battery can 1 on which a positive electrode terminal and a negative electrode terminal (none of which is illustrated) are formed. The drawings exemplify a stacked-type lithium-ion rechargeable battery but may exemplify other types of rechargeable batteries.

In the angular battery can 1 which is made of aluminum or the like, a plurality of approximately rectangular sheet-shaped positive electrodes 2 and a plurality of approximately rectangular sheet-shaped negative electrodes 3 are stacked or laminated with separators interposed between them to form a group of electrodes. Here, each of the separators is a bag-shaped separator 7. The sheet-shaped positive electrode 2 which is formed smaller than the sheet-shaped negative electrode 3 is arranged inside the bag-shaped separator 7. Since the sheet-shaped positive electrodes 2 are wrapped by the bag-shaped separators 7, short circuits between the sheet-shaped positive electrode 2 and the sheet-shaped negative electrode 3 is not likely to occur even when stacking deviation occurs. As a result, it is possible to prevent failure of the battery.

The insulating auxiliary sheet 8 may be a material with or without tension, as long as it is able to substantially cover or fill round parts of corners of the angular battery can 1. Materials and/or thickness of the insulating auxiliary sheet 8 may be adjusted to form an insulating auxiliary plate which is not likely to be deflected or deformed.

Since the insulating auxiliary sheets or the insulating auxiliary plates 8 substantially cover or fill the round parts of the corners of the angular battery can 1, it is possible to prevent deformation of electrodes at ends of the group of electrodes along the round parts of the corners of the angular battery can 1.

In order to increase electric capacity as much as possible, it is preferable that an electrode plane width "a" along the long-side of the plane where the positive electrode terminal and the negative electrode terminal (neither of which is illustrated) are formed, is designed so as to be substantially equal to a width of a flat plane excluding round parts of corners of the angular battery can 1 along the long-side.

In this drawing, the width of the sheet-shaped negative electrode 3 along a direction corresponding to the long-side is greater than the sheet-shaped positive electrode 2 to be substantially equal to the width of the flat plane along the long-side direction excluding the round parts of the corners. The width of the insulating auxiliary sheet 8 is designed to be substantially equal to the internal length "b" of the angular battery can 1 along the long-side.

Where "c" denotes the internal length of the angular battery can 1 along the short-side of the plane on which the positive electrode terminal and the negative electrode terminal (neither of which is illustrated) are formed, and "d" denotes the width of the flat plane along the short-side excluding the round parts of the corners, the thickness "e" of the insulating auxiliary sheet 8 of is designed to be e ≈ (c-d)÷2.

According to the structure mentioned above, the round parts of the corners of the angular battery can 1 can be covered or filled substantially or completely by the insulating auxiliary sheets. As a result, it is possible to prevent failure of the battery caused by bending of the sheet shaped electrodes 2, 3 at the round parts of the corners of the angular battery can 1.

Because the insulating auxiliary sheets 8 are arranged as described above, even when vibration causes deviation between the sheet-shaped electrodes, the deviated sheet-shaped electrodes are able to contact with and perpendicular to the short side of the angular battery can 1 (i.e., at an angle of about 90 degrees). Therefore, bending of the electrodes is not likely to occur. Since the angular battery can 1 is an electric conductor made of a metal such as aluminum, it is required to provide insulation between the can and the sheet-shaped electrodes. Therefore, side-plane insulating auxiliary sheets 9 having the width of "d" are arranged on inner walls of the angular battery can along the short-side, and between the group of electrodes and the angular battery can 1.

The side-plane insulating auxiliary sheets 9 may be made of the same material as the insulating auxiliary sheets 8 or may be made of a different material. Unlike the insulating auxiliary sheets 8, the side-plane insulating auxiliary sheets 9 are required just for insulation and are preferably designed to be as thin as possible in order to store an electrolyte solution in the space inside the group of electrodes and the angular battery can 1 as much as possible.

The insulating auxiliary sheets 8 and the side-plane insulating auxiliary sheets 9 are preferably provided with functions to infiltrate the electrolyte solution easily.

FIG. 1A shows positions of the tapes. The group of electrodes is positioned between two insulating auxiliary sheets 8, and the insulating auxiliary sheets 8 are pressurized and are joined together by the insulating tapes.

Thus, the group of electrodes does not contact with the battery can and is positioned within the planes of these two insulating auxiliary sheets 8. After the group of electrodes is sealed into the angular battery can, in order to sufficiently prevent deviation of the sheet-shaped electrodes, it is preferable that the insulating auxiliary sheets 8 and the group of electrodes are fixed firmly by using the insulating tape 10. Therefore, in FIG. 1A, provided a position at which a sheet-shaped electrode tab is located is upper side, the insulating tape is taped at two sites on each side plane and at one site on the bottom.

By firmly fixing the group of electrodes between the insulating auxiliary sheets 8, it is possible to exclude the above-described side-plane insulating auxiliary sheets 9. As a result, it is possible to store an electrolyte solution at a greater amount. Therefore, the side-plane insulating auxiliary sheet 9 is not always required and may be arranged for preventing short circuits between a sheet-shaped electrode and the angular battery can 1.

As shown in FIG. 1A, a sheet-shaped electrode tab extends to a direction of the plane on which the positive electrode terminal and the negative electrode terminal are formed (hereinafter, it is called as "upper direction", and the opposite direction is called as "lower direction"), and the insulating auxiliary sheet 8 has a width greater than the width of the group of electrodes, which protrudes to upper and lower direction. Because the group of electrodes arranged as described-above is fixed by the tape, no additional insulating auxiliary sheet is required to be arranged on the bottom of the battery can to provide insulation between the group of electrodes and the angular battery can 1. Even if the rechargeable battery is erroneously placed upside down, the insulating auxiliary sheet 8 which extends over an electrode tab is able to contact the angular battery can. Therefore, the group of electrodes compressed and fixed by the two insulating auxiliary sheets inside the battery can is positioned like floating in midair and the group does not contact the angular battery can. It means that the group of electrodes does not contact with the battery can. Therefore, it is possible to reduce bending of the electrode tab as compared with a case that no insulating auxiliary sheets 8 are provided. Thus, it is also possible to prevent failures resulting from bending and fracture of the electrode tab.

The present embodiment exemplifies the group of electrodes which is a stacked type. As a matter of course, the same effect can be obtained in a case where a wound type group of electrodes is sealed in the angular battery can. The rechargeable battery includes a lithium-ion rechargeable battery, for example.

### Second embodiment

A rechargeable battery of the second embodiment is explained with reference to FIG. 2. The present embodiment may be modified and implemented without departing from the scope of the present invention.

In FIG. 2, unlike the first embodiment, a bottom insulating auxiliary sheet 11 is arranged on the bottom of an angular battery can 1 to provide insulation between the group of electrodes and the angular battery can 1. Then, the group of electrodes is pressed by two insulating auxiliary sheets 8 and joined together with the bottom insulating auxiliary sheet 11 by using an insulating tape. Thus, the group of electrodes is fixed within the insulating auxiliary sheets 8.

In the present embodiment, in addition to the side-plane insulating tape 10 shown in Fig. 1, an insulating tape 12 wider than the insulating tape 10 is taped so as to go around the two insulating auxiliary sheets 8 in order to fix the group of electrodes more firmly. In order to firmly join the bottom insulating auxiliary sheet 11 with the insulating auxiliary sheets 8 and sufficiently prevent short circuits between the group of electrodes and the angular battery can, an insulating tape 13 wider than the insulating tape 10 is taped so as to go around the two insulating auxiliary sheets 8 and the bottom insulating auxiliary sheet 11.

Except for the above-described structure, the present embodiment is the same as the above-described first embodiment.

According to the battery as mentioned above, it is possible to prevent bending of sheet-shaped electrodes at ends of the group of electrodes and also more reliably prevent short circuits between the angular battery can 1 and the group of electrodes.

### Third embodiment

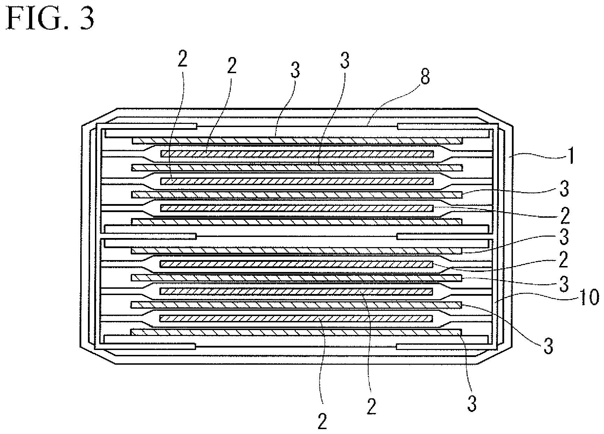

A rechargeable battery of a third embodiment is explained with reference to FIG. 3. The present embodiment may be modified and implemented without departing from the scope of the present invention.

In FIG. 3, unlike the above-described embodiments, two groups of the electrodes are arranged in an angular battery can 1, although each of them is the same structure as the group of the electrodes in FIG.1. That is, inside the angular battery can 1, two insulating auxiliary sheets 8 are used to compress and to sandwich each one group of electrodes and an insulating tape 10 is used to join these two insulating auxiliary sheets 8. Therefore, the group of electrodes is fixed and positioned within the planes of the insulating auxiliary sheets. Two sets of the group of electrodes are arranged and stacked in parallel each other. It is necessary that the total width of the two sets along the short-side is substantially equal to "c".

Except for the above-described structure, the present embodiment is formed in a same manner as the above-described preferred embodiment and the first embodiment. Since the round parts of the corners of the angular battery can are covered or filled by the auxiliary sheets 8 at the tip ends of the above-arranged two sets of structures, it is possible to prevent bending of sheet-shaped electrodes at the ends of the group of electrodes.
Although the present embodiment includes two groups of the electrodes inside the angular battery can 1 as mentioned above, regarding the groups in the present embodiment, three or more groups may be arranged

### Fourth embodiment

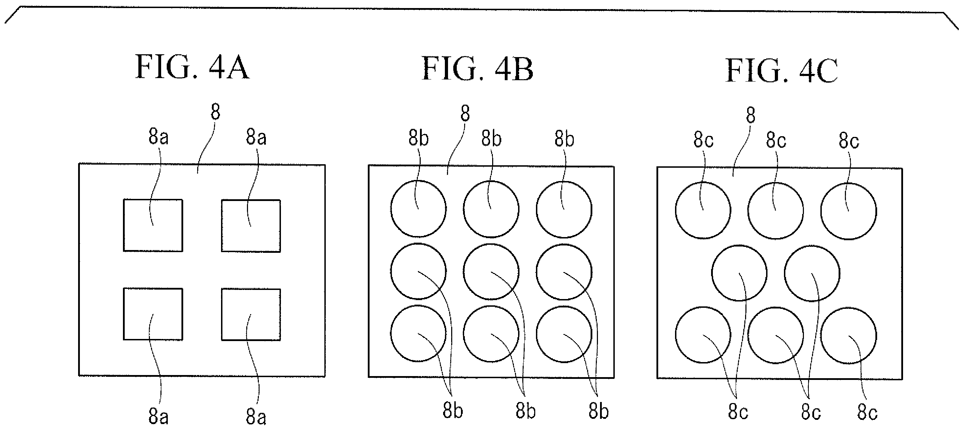

A rechargeable battery of a fourth embodiment is explained with reference to FIG. 4. The present embodiment may be modified and implemented without departing from the scope of the present invention.

In FIGS. 4A, 4B, and 4C, unlike the first to third embodiments, holes 8a, 8b, and 8c bored through the insulating auxiliary sheets 8 respectively having a square or a circular shape in aligned (grid) arrangement, or a circular shape in staggered arrangement are formed. Any shape will be permissible, as long as the group of electrodes is compressed and firmly fixed within the planes of the insulating auxiliary sheets 8. According to this embodiment, it is possible to enhance infiltration of an electrolyte solution within the group of electrodes, thereby enhancing the performance of the battery. To disperse pressure in the time of fixing the electrode plane evenly, holes having the circular shape are more preferable than an angular shape such as a square or a triangular shape. In a case that the holes have circular shapes, the staggered arrangement as shown in FIG. 4C is more preferable than the grid arrangement shown in FIG. 4B, because a width of the area of the insulating auxiliary sheet 8 between adjacent through holes is able to be widen according to the arrangement. Utilizing the sheet having the wide width areas, it is possible to hold and fix the group of electrodes more firmly.

Except for the above-described structure, the present embodiment has the same structure as the first embodiment to the third embodiment.

### Fifth embodiment

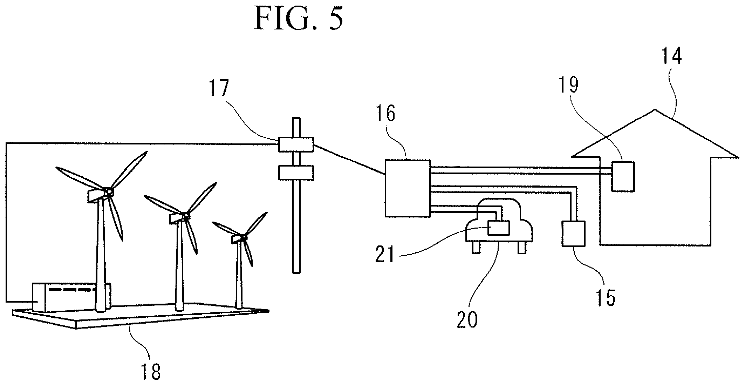

As another embodiment, a power storage/ power supply system that utilizes a stacked-type lithium-ion rechargeable battery is explained with reference to FIG. 5. The present embodiment shall not be limited to the following embodiment, but may be modified and implemented without departing from the scope of the present invention.

A rechargeable battery 21 mounted on an electric vehicle 20 and a backup rechargeable battery 15 placed outside a house 14 are rechargeable batteries according to the embodiments as mentioned above. For example, the rechargeable batteries may be stacked-type lithium-ion rechargeable batteries.

A power storage system will be explained at first. Electric power generated at power generating equipment 18 such as a wind power, a thermal power plant, a hydroelectric power plant, an atomic power plant, a solar battery and a fuel battery or the like is supplied via a power-supplying electric system 17 to a control box 16 which is used by a user. The user conducts switching operation by the control box 16 to supply the electric power sent from the power generating equipment 18 to any one of the rechargeable battery 21 as a power source for driving the electric vehicle 20, the backup rechargeable battery 15, and a distribution board 19. The backup rechargeable battery 15 or the rechargeable battery 21 of the electric vehicle 20 are charged or store the electric power upon the supply. It is preferable that the backup rechargeable battery 15 stores power sufficiently, so as to be used as a backup power source when disasters or the like halt power supply from the power generating equipment 18.

The control box may be controlled by programs in such a manner that power is supplied to the distribution board 19 during daytime, whereas power is supplied to the backup rechargeable battery 15 or the rechargeable battery 21 of the electric vehicle 20 at night.

Next, a power supply system is explained. The backup rechargeable battery 15 charged by the power storage system is electrically connected via the control box 16 to the distribution board 19 inside the house 14. The distribution board 19 is electrically connected to electric appliances such as air conditioners and televisions sets, etc., connected to plugs inside the house 14. A user is able to select whether an electric appliance inside the house 14 is switched on by receiving power from the power-supplying electric system 17 or the electric appliance is switched on by utilizing power of the backup rechargeable battery 15, the power of which is stored by use of the power storage system. The above selection and switching operation are carried out by use of the control box 16.

Where the switching operation is done by using the control box to electrically connect the backup rechargeable battery 15 with the distribution board 19, power is supplied from the backup rechargeable battery 15 to the distribution board 19. Then, the electric appliance can be switched on.

The electric vehicle 20 is able to travel by being supplied with the power from the rechargeable battery 21, the power of which is stored by use of the power storage system, to a motor that drives wheels. The electric vehicle 20 includes all vehicles which are able to drive wheels by an electric motor. Therefore, hybrid vehicles are also included as the electric vehicle 20.

The power storage/power supply system in which the stacked-type lithium-ion rechargeable battery of the present invention is utilized is able to prevent as much as possible stacking deviation and bending of electrodes at a corner inside the angular battery can resulting from vibration which partially contributes to failures of the rechargeable battery. Therefore, the above system is able to carry out stable operation fewer in failures as a power supply system equipped to vehicles subjected to frequent vibration and also as a power supply/power storage system used in countries where earthquakes are frequent.

## Claims

1. A rechargeable battery comprising:
an angular battery can (1) having a positive electrode terminal and a negative electrode terminal;
a group of electrodes (2, 3) arranged in the angular battery can, in which a sheet-shaped positive electrode (2) electrically connected to the positive electrode terminal and a sheet-shaped negative electrode (3) electrically connected to the negative electrode terminal are stacked or laminated with a separator (7) interposed between them; and
first and second insulating auxiliary sheets (8) having a width along a direction of a long-side of a plane of the angular battery can on which the positive electrode terminal and the negative electrode terminal are formed, which is greater than a width of the group of electrodes along the long-side, and having a thickness substantially covering or filling a round part of a corner of the angular battery can, respectively;
wherein the first and the second insulating auxiliary sheets are arranged to sandwich the group of electrodes from sides of the group corresponding to the long-side.

2. The rechargeable battery according to claim 1, wherein the group of electrodes (2, 3) includes a plurality of the sheet-shaped positive electrodes (2) and a plurality of the sheet-shaped negative electrodes (3), and wherein each of the sheet-shaped positive electrodes is stacked or laminated on a separator (7) stacked or laminated on each of the sheet-shaped negative electrodes.

3. The rechargeable battery according to claim 1, wherein holes (8a, 8b, 8c) are bored through the first and the second insulating auxiliary sheets (8).

4. The rechargeable battery according to claim 1, further comprising an insulating tape (10), wherein the first and the second insulating auxiliary sheets (8) press the group of electrodes (2, 3) and are joined by the insulating tape.

5. The rechargeable battery according to claim 4, wherein the first and the second insulating auxiliary sheets (8) have a width along a direction perpendicular to the plane of the angular battery can (1) on which the positive electrode terminal and the negative electrode terminal are formed, which is greater than a width of the group of electrodes along the direction perpendicular to the plane.

6. An electric vehicle (20) comprising a rechargeable battery (21) according to claim 1 and a motor that drives wheels,
wherein the motor is driven by receiving electric power from the rechargeable battery.

7. A power storage system comprising a rechargeable battery (21) according to claim 1 and a power generating equipment (18),
wherein the rechargeable battery stores electric power by receiving the electric power from the power generating equipment.

## Patentansprüche

1. Wiederaufladbare Batterie, aufweisend:
einen abgewinkelten Batteriebehälter (1) mit einem positiven Elektrodenanschluss und einem negativen Elektrodenanschluss;
eine Gruppe von Elektroden (2, 3), die in dem abgewinkelten Batteriebehälter angeordnet sind, in welchem eine plattenförmige positive Elektrode (2), die mit dem positiven Elektrodenanschluss elektrisch verbunden ist, und eine plattenförmige negative Elektrode (3), die mit dem negativen Elektrodenanschluss elektrisch verbunden ist, mit einem dazwischen angeordneten Separator (7) gestapelt oder laminiert sind; und
erste und zweite isolierende Hilfsplatten (8) jeweils mit einer Breite entlang einer Richtung einer Längsseite einer Ebene des winkelförmigen Batteriebehälters, an welcher der positive Elektrodenanschluss und der negative Elektrodenanschluss ausgebildet sind, welche größer als eine Breite der Gruppe von Elektroden entlang der Längsseite ist, und mit einer Dicke, die im Wesentlichen einen abgerundeten Teil einer Ecke des winkelförmigen Batteriebehälters bedeckt oder füllt,
wobei die ersten und zweiten isolierenden Hilfsplatten angeordnet sind, um die Gruppe von Elektroden von Seiten der Gruppe korrespondierend der Längsseite dazwischen aufzunehmen.

2. Wiederaufladbare Batterie nach Anspruch 1, wobei die Gruppe von Elektroden (2, 3) eine Vielzahl der plattenförmigen positiven Elektroden (2) und eine Vielzahl der plattenförmigen negativen Elektroden (3) umfasst, und wobei jede der plattenförmigen positiven Elektroden an einem Separator (7) gestapelt oder laminiert ist, der an jeder der plattenförmigen negativen Elektroden gestapelt oder laminiert ist.

3. Wiederaufladbare Batterie nach Anspruch 1, wobei Löcher (8a, 8b, 8c) durch die ersten und zweiten isolierenden Hilfsplatten (8) gebohrt sind.

4. Wiederaufladbare Batterie nach Anspruch 1, ferner mit einem isolierenden Band (10), wobei die ersten und zweiten isolierenden Hilfsplatten (8) die Gruppe von Elektroden (2, 3) zusammendrücken und durch das isolierende Band verbunden sind.

5. Wiederaufladbare Batterie nach Anspruch 4, wobei die ersten und zweiten isolierenden Hilfsplatten (8) eine Breite entlang einer Richtung senkrecht zu der Ebene des abgewinkelten Batteriebehälters (1), an welcher der positive Elektrodenanschluss und der negative Elektrodenanschluss ausgebildet sind, aufweist, welche größer als eine Breite der Gruppe von Elektroden entlang der Richtung senkrecht zu der Ebene ist.

6. Elektrisches Fahrzeug (20) mit einer wiederaufladbaren Batterie (21) nach Anspruch 1 und einem Motor, der Räder antreibt,
wobei der Motor angetrieben wird, indem elektrische Energie von der wiederaufladbaren Batterie empfangen wird.

7. Energiespeichersystem mit einer wiederaufladbaren Batterie (21) nach Anspruch 1 und einer Energieerzeugungsausrüstung (18),
wobei die wiederaufladbare Batterie elektrische Energie speichert, indem die elektrische Energie von der Energieerzeugungsausrüstung empfangen wird.

## Revendications

1. Batterie rechargeable comprenant :
un boîtier de batterie angulaire (1) ayant une borne d'électrode positive et une borne d'électrode négative ;
un groupe d'électrodes (2, 3) agencé dans le boîtier de batterie angulaire, dans lequel une électrode positive en forme de feuille (2) électriquement connectée à la borne d'électrode positive et une électrode négative en forme de feuille (3) électriquement connectée à la borne d'électrode négative sont empilées ou stratifiées avec un séparateur (7) interposé entre elles ; et
des première et seconde feuilles auxiliaires isolantes (8) ayant une largeur le long d'une direction d'un côté long d'un plan du boîtier de batterie angulaire sur laquelle la borne d'électrode positive et la borne d'électrode négative sont formées, qui est plus grande qu'une largeur du groupe d'électrodes le long du côté long, et ayant une épaisseur recouvrant ou remplissant sensiblement une partie ronde d'un coin du boîtier de batterie angulaire, respectivement ;
dans laquelle les première et seconde feuilles auxiliaires isolantes sont agencées pour prendre en sandwich le groupe d'électrodes à partir des côtés du groupe correspondant au côté long.

2. Batterie rechargeable selon la revendication 1, dans laquelle le groupe d'électrodes (2, 3) inclut une pluralité d'électrodes positives en forme de feuille (2) et une pluralité d'électrodes négatives en forme de feuille (3), et dans laquelle chacune des électrodes positives en forme de feuille est empilée ou stratifiée sur un séparateur (7) empilé ou stratifié sur chacune des électrodes négatives en forme de feuille.

3. Batterie rechargeable selon la revendication 1, dans laquelle des trous (8a, 8b, 8c) sont percés dans les première et seconde feuilles auxiliaires isolantes (8).

4. Batterie rechargeable selon la revendication 1, comprenant en outre un ruban isolant (10), dans laquelle les première et seconde feuilles auxiliaires isolantes (8) appuient contre le groupe d'électrodes (2, 3) et sont jointes par le ruban isolant.

5. Batterie rechargeable selon la revendication 4, dans laquelle les première et seconde feuilles auxiliaires isolantes (8) ont une largeur le long d'une direction perpendiculaire au plan du boîtier de batterie angulaire (1) sur laquelle la borne d'électrode positive et la borne d'électrode négative sont formées, qui est plus grande qu'une largeur du groupe d'électrodes le long de la direction perpendiculaire au plan.

6. Véhicule électrique (20) comprenant une batterie rechargeable (21) selon la revendication 1 et un moteur qui entraîne des roues,
dans lequel le moteur est entraîné en recevant la puissance électrique de la batterie rechargeable.

7. Système de stockage de puissance comprenant une batterie rechargeable (21) selon la revendication 1 et un équipement de génération de puissance (18),
dans lequel la batterie rechargeable stocke la puissance électrique en recevant la puissance électrique de l'équipement de génération de puissance.
